Europäisches Patentamt

European Patent Office

Office européen des brevets

(19)

(11) Veröffentlichungsnummer : **0 116 156**
**B1**

(12) # EUROPÄISCHE PATENTSCHRIFT

(45) Veröffentlichungstag der Patentschrift :
04.03.87

(21) Anmeldenummer : 83112775.8

(22) Anmeldetag : 19.12.83

(51) Int. Cl.⁴ : **B 23 K 11/32**

(54) **Verfahren zum elektrischen Widerstandsschweissen und Anwendung des Verfahrens bei der Fassherstellung.**

(30) Priorität : 17.01.83 CH 241/83

(43) Veröffentlichungstag der Anmeldung :
22.08.84 Patentblatt 84/34

(45) Bekanntmachung des Hinweises auf die Patenterteilung : 04.03.87 Patentblatt 87/10

(84) Benannte Vertragsstaaten :
AT BE CH DE FR GB IT LI LU NL SE

(56) Entgegenhaltungen :
US-A- 2 245 298
US-A- 3 407 280
Patent Abstracts of Japan Band 5, Nr. 151, 24. September 1981 & JP-A-56-80380
Patent Abstracts of Japan Band 5, Nr. 151, 24. September 1981
Patent Abstracts of Japan Band 4, Nr. 33, 21. März 1980 Seite 148M3 & JP-A-55-8377
Patent Abstracts of Japan Band 5, Nr. 2, 9. Januar 1981 & JP-A-55-136584
Patent Abstracts of Japan Band 5, Nr. 2, 9. Januar 1981

(73) Patentinhaber : ELPATRONIC AG
Baarerstrasse 117
CH-6300 Zug (CH)

(72) Erfinder : Opprecht, Paul
Herrenbergstrasse 10
CH-8962 Bergdietikon (CH)

(74) Vertreter : Hotz, Klaus, Dipl.-El.-Ing. / ETH
c/o SOUDRONIC AG Industriestrasse 35 Postfach 11
CH-8962 Bergdietikon (CH)

**Beschreibung**

Die Erfindung bezieht sich auf ein Verfahren zum elektri-Widerstandsschweissen von zwei längs einer langgestreckten, insbesondere kreisartig in sich geschlossenen Verbindungsstelle flüssigkeits- und/oder gasdicht miteinander zu verbindenden Werkstücken, von denen mindestens eines ein Blech ist, das nahe der vorgesehenen Verbindungsstelle eine entlang derselben verlaufende Kante aufweist und aus einem biegbaren und bei Beanspruchung über seine Streckgrenze hinaus fliessfähigem Material besteht, sowie auf eine Anlage zur Durchführung des Verfahrens und eine Anwendung des Verfahrens zur Anbringung von Spunden in Blechfässern.

Verfahren dieser Art sind insbesondere Form von Rollennahtschweissverfahren bekannt geworden, beispielsweise aus dem Prospekt « Mantel-Boden-Deckel-Schweissanlage für Fässer » MBS 1001 D der Fa. Soudronic AG, Bergdietikon, Schweiz, vom September 1977, aus dem eine Anlage zum Dichtschweissen von Blechfässern und insbesondere auch zum flüssigkeitsdichten Verschweissen von Fassdeckel und Fassboden mit dem Fassmantel längs an den Rändern von Boden, Deckel und Mantel vorgesehenen Schweissfalzen mittels Rollennahtschweissung bekannt ist. Des weiteren ist es natürlich auch von der Dosenherstellung her seit langem bekannt, dass sich mittels Rollennahtschweissung langgestreckte Verbindungsstellen, dort in Form der miteinander zu verbindenden Längsränder eines Dosenrumpfes, dichtschweissen lassen. Das Rollennahtschweissen ist aber im Prinzip nur eine kontinuierliche Folge einzelner, sich überlappender Punktschweissungen mit Verschiebung der zu verschweissenden Werkstücke um jeweils einen Punktabstand zwischen zwei aufeinanderfolgenden Punktschweissungen, und bei solchen aufeinanderfolgenden Punktschweissungen ist die Erzielung einer dichten Schweissnaht deswegen verhältnismässig unproblematisch, weil der Schweissstrom sich dabei zwangsläufig auf den jeweils zu schweissenden Punkt konzentriert und wegen der gleichbleibenden Einstellung der Schweissmaschine bzw. des Schweissstromes und der Elektrodenkraft während einer Rollennahtschweissung somit für jeden einzelnen der zu schweissenden Punkte bzw. für jede einzelne der aufeinanderfolgenden Punktschweissungen im wesentlichen gleiche Verhältnisse vorliegen, so dass durch geeignete Einstellung der Schweissmaschine erreicht werden kann, dass längs der Schweissnaht eine kontinuierliche Folge von etwa gleichgrossen, ineinander eingreifenden und nicht bis zur Werkstücksoberfläche der zu verschweissenden Werkstücke reichenden Schweisslinsen erzeugt wird, die zusammen eine langgestreckte und wegen ihres Ineinandergreifens dichte Schweissstelle bilden.

Das Rollennahtschweissen ist jedoch nicht in jedem Falle, in dem zwei Werkstücke längs einer langgestreckten Verbindungsstelle dicht miteinander verbunden werden sollen, anwendbar, denn der Anwendungsbereich dieses Schweissverfahrens ist im wesentlichen auf das Verschweissen von Blechen beschränkt, wobei schon das Verschweissen von Blechen verschiedener Blechstärken und/oder unterschiedlichen Blechmaterials meist mit beträchtlichen Schwierigkeiten verbunden ist. Ungeeignet ist das Rollennahtschweissen insbesondere zur Herstellung einer dichten Verbindung zwischen einem Blech und einem starren Körper von wesentlich grösserer Dicke als der Blechstärke des Bleches wie beispielsweise dem dichten Aufschweissen eines Rohrflansches auf ein Blech, weil es sich bei der zum Verschweissen des starren Körpers erforderlichen hohen Stromdichte praktisch kaum vermeiden lässt, dass sich das Blech beim Schweissen überhitzt und dem Elektrodendruck dann nicht mehr standzuhalten vermag. Zwar liesse sich hier unter Umständen dadurch Abhilfe schaffen, dass man jeden einzelnen Punkt der Rollennahtschweissung mit mehreren, von zwischengeschalteten Impulspausen unterbrochenen Stromimpulsen schweisst und so die erforderliche Wärme sozusagen schubweise zuführt und jeweils in den Impulspausen eine Abkühlung des Bleches ermöglicht, aber praktisch kommt eine solche Art der Rollennahtschweissung schon deswegen nicht in Betracht, weil die punktweise Schweissung beim Rollennahtschweissen allein schon eine der Anzahl der längs der Schweissnaht nacheinander zu schweissenden Punkte entsprechende Zeit in Anspruch nimmt und man diese Zeit schon aus wirtschaftlichen Gründen nicht noch durch die schubweise, von Pausen unterbrochene Energiezuführung bei jedem einzelnen zu schweissenden Punkt auf ein Vielfaches erhöhen kann.

Abgesehen von dem Rollennahtschweissen, das ja wie schon gesagt im Prinzip nur eine Aufeinanderfolge einzelner, sich überlappender Punktschweissungen ist, ist es jedoch bisher trotz vielfacher vergeblicher Versuche und Bemühungen der in der Schweisstechnik tätigen Fachleute noch nicht gelungen, ein elektrisches Widerstandsschweissverfahren zu finden, mit dem zwei Werkstücke längs einer langgestreckten Verbindungsstelle flüssigkeits- und/oder gasdicht miteinander verschweisst werden können, und insbesondere war es bisher noch nicht möglich, zwei Werkstücke über eine solche langgestreckte Verbindungstelle mittels Widerstandsschweissung in einem einheitlichen Schweissvorgang gleichzeitig längs der gesamten Verbindungsstelle dicht miteinandner zu verschweissen. Der Grund dafür liegt darin, dass bisher eine wenigstens im wesentlichen gleichmässige Verteilung der Stromdichte längs der gesamten Verbindungsstelle nicht erzielt werden konnte. Das wird verständlich, wenn man sich die gesamte langgestreckte Verbindungsstelle in eine Vielzahl von einzelnen aneinander angrenzenden gleichgrossen kurzen Abschnitten unterteilt vorstellt, denn bei einer gleichzeitigen Schweissung längs der gesamten langgestreckten Verbindungsstelle sind alle diese kurzen Abschnitte elektrisch parallelgeschaltet, und damit in jedem dieser gleichgrossen Abschnitte der gleiche Strom fliesst und sich somit längs der gesamten Verbindungsstelle die gleiche Stromdichte ergibt, muss der bei Schweissbeginn in erster Linie von dem Uebergangswiderstand an der Berührungsstelle der beiden Werkstücke dargestellte Widerstand in jedem dieser Abschnitte gleichgross sein. Nun wird der Uebergangswiderstand in einem solchen Abschnitt aber zum wesentlichen Teil von dem Druck bestimmt, mit dem die beiden Werkstücke in dem betreffenden Abschnitt aufeinandergedrückt werden, und das bedeutet, dass zu einer Erzielung der gleichen Stromdichte längs der gesamten langgestreckten Verbindungsstelle auch der Druck der beiden Werkstücke aufeinander längs der gesamten Verbindungsstelle gleichgross sein müsste. Eine solche Bedingung ist aber in der Praxis kaum realisierbar, weil schon Unebenheiten in der Grössenordnung von einigen wenigen Mikron in den sich berührenden Oberflächen der miteinander zu verbindenden Werkstücke dazu führen können, dass in den erhabenen Oberflächenbereichen ein relativ hoher Druck und in den nur wenige Mikron tiefer gelegenen Oberflächenbereichen überhaupt kein Druck herrscht, und man daher eine bis auf Mikron genaue Feinstbearbeitung der Oberflächen der miteinander zu verbindenden Werstücke über die gesamte Länge der vorgesehenen Verbindungsstelle vor der Schweissung vornehmen müsste, um die Bedingung gleichen Druckes der beiden Werkstücke aufeinander längs der gesamten langgestreckten Verbindungsstelle auch nur einigermassen erfüllen zu können, und derartige Feinstbearbeitungen können natürlich schon aus wirtschaftlichen Gründen jedenfalls für Massenfertigungen überhaupt nicht in Betracht gezogen werden. Der Grund dafür, dass schon derart geringfügige Unebenheiten in den sich berührenden Oberflächen der Werkstücke zu den genannten Druckunterschieden führen können, ist in erster Linie in den hohen Elastizitätsmodulen der für die Werkstücke hauptsächlich in Betracht kommenden Metalle wie z. B. dem in der Grössenordnung von 20 000 kg/mm$^2$ liegenden Elastizitätsmodul von Stahl zu suchen, denn bei solchen hohen Elastizitätsmodulen ist die Zusammenpressung der erhabenen Bereiche der sich berührenden Oberflächen der Werkstücke beim Gegeneinanderdrücken der Werkstücke zu gering, als dass dadurch die Höhendifferenzen im Oberflächenprofil ausgeglichen und damit auch die tiefer gelegenen Oberflächenbereiche miteinander in Kontakt gebracht werden könnten.

Aus diesen Gründen konnten auch die vielen bisher angestellten Versuche, zwei Werkstücke über eine langgestreckte Verbindungsstelle mittels Widerstandsschweissung in einem einheitlichen Schweissvorgang gleichzeitig längs der gesamten Verbindungsstelle dicht miteinander zu verschweissen, wie beispielsweise der häufig unternommene Versuch, Rohrflansche mit einer einzigen Widerstandsschweissung flüssigkeitsdicht mit einem den Flansch tragenden Blech zu verbinden, nicht zum Erfolg führen. Bei den Versuchen mit Rohrflanschen zeigte sich vielmehr, dass entweder bei niedrigen Schweissströmen nur eine auf die sich berührenden erhabenen Oberflächenbereiche der zu verbindenden Ringflächen beschränkte punktuelle Schweissung mit ausserordentlich geringer Schweisstiefe erreicht wurde oder aber bei höheren Schweissströmen Verbrennungen in den sich berührenden erhabenen Oberflächenbereichen mit Gas- und Blasenbildungen erfolgten, die eine einwandfreie Schweissung von vornherein ausschlossen. Ursache dieser Verbrennungen ist, dass sich der Schweisstrom bei Schweissbeginn auf die sich berührenden erhabenen Oberflächenteile konzentriert, deren Gesamtfläche ja wesentlich geringer als die für die Verbindung vorgesehene Ringfläche ist, so dass sich bei einer Bemessung des Schweissstromes entsprechend einer auf die gesamte Ringfläche bezogenen mittleren Stromdichte ohnehin bei Schweissbeginn an den sich berührenden erhabenen Oberflächenteilen schon eine weit über dieser mittleren Stromdichte liegende Stromdichte ergibt, und dass dann unmittelbar nach Schweissbeginn der Uebergangswiderstand an den Stellen, auf die sich der Schweisstrom konzentriert hat, stark zurückgeht, was zu einer nochmaligen weiteren Konzentration des Schweissstromes und damit zu einer weiteren beträchtlichen Erhöhung der Stromdichte an den betreffenden Stelund damit dann zu den besagten Verbrennungen führt. Möglicherweise spielen bei diesen starken Stromkonzentrationen zusätzlich auch magnetische Effekte eine Rolle, insbesondere im Hinblick darauf, dass gleichzeitig mit diesen starken Stromkonzentrationen in der Regel auch eine Schweissung an den ursprünglich tiefer gelegenen Oberflächenteilen verhindert wird, obwohl diese tiefer gelegenen Oberflächenteile nach Schweissbeginn und der damit einsetzenden Erweichung der erhabenen Oberflächenteile auch miteinander in Kontakt kommen dürften.

Die Misserfolge bei den Versuchen, Rohrflansche mit einer einzigen Widerstandsschweissung flüssigkeitsdicht mit einem den Flansch tragenden Blech zu verbinden, und die mangelnde Eignung der bekannten Rollennahtschweissverfahren zu diesem Zweck führten dazu, dass Rohrflansche und insbesondere auch Spunde an Blechfässern in aller Regel mit Hilfe von Dichtungen flüssigkeitsdicht mit einem den Flansch bzw. Spund tragenden Blech verbunden wurden, nachdem auch andere Schweissverfahren wie beispielsweise die Schweissung mit einem entlang der vorgesehenen Verbindungsstelle laufenden Lichtbogen oder einer Schweissgasflamme unter Schutzgas sich entweder als ungeeignet oder als technisch zu aufwendig erwiesen hatten, und Dichtungen haben natürlich den bekannten Nachteil, dass das Dichtungsmaterial an die mit der Dichtung in Berührung kommende Flüssigkeit angepasst sein muss und unter Umständen relativ kostspielige Dichtungsmaterialien erforderlich sind, ganz abgesehen davon, dass bei bestimmten Dichtungsmaterialien auch mit Alterungserscheinungen gerechnet werden muss und bei mit Dichtungen abgedichteten Stellen unter Umständen bei grösseren Temperaturschwankungen mit temperaturbedingten Undichtigkeiten zu rechnen ist und auch die mechanische Beanspruchbarkeit von mittels Dichtungen abgedichteten Rohrflanschen oder Spunden beschränkt ist, so dass beispielsweise bei den zur Prüfung der Beanspruchbarkeit von Blechfässern vorgeschriebenen Falltests durchaus infolge von Verformungen der Fässer oder Spunde Undichtigkeiten an mit Dichtungen abgedichteten Spunden auftreten können.

Der Erfindung lag daher die Aufgabe zugrunde, ein Verfahren der eingangs genannten Art zu finden, das es ermöglicht, zwei Werkstücke über eine langgestreckte Verbindungsstelle mittels Widerstandsschweissung in einem einheitlichen Schweissvorgang gleichzeitig längs der gesamten Verbindungsstelle dicht miteinander zu verschweissen, und mit dem daher sämtliche bisher mit Dichtungen aufgetretenen Probleme überwunden werden können.

Erfindungsgemäss wird das bei einem Verfahren der eingangs genannten Art dadurch erreicht, dass zunächst der sich an die genannte Kante anschliessende Rand des Bleches entlang der vorgesehenen Verbindungsstelle derart umgebogen wird, dass sich für das andere der beiden zu verbindenden Werkstücke auf dem umgebogenen Rand des Bleches eine bei Druck der beiden Werkstücke gegeneinander zunächst elastisch nachgebende, entlang der vorgesehenen Verbindungsstelle verlaufende Auflagefläche ergibt, und dass danach die beiden Werkstücke aneinander angelegt und an die beiden Werkstücke Elektroden so angelegt werden, dass bei gegeneinander gerichtetem Druck der Elektroden die beiden Werkstücke gegeneinandergedrückt und damit das genannte andere Werkstück auf die besagte zunächst elastisch nachgebende Auflagefläche auf dem umgebogenen Rand des Bleches gedrückt wird, und anschliessend die Elektroden so stark gegeneinandergedrückt werden, dass sich eine weitere Verformung des umgebogenen Randes und dadurch eine Anpassung von nicht satt aneinander anliegenden Flächenteilen der Auflagefläche und der auf dieser aufliegenden Kontaktfläche des anderen Werkstücks aneinander ergibt und dass dann der Schweissstrom eingeschaltet und die beiden Werkstücke gleichzeitig längs der gesamten Auflagefläche miteinander verschweisst werden.

Hauptvorteil des vorliegenden Verfahrens ist, dass damit erstmalig eine Dichtschweissung über langgestreckte Verbindungsstellen in einem einzigen einheitlichen Schweissvorgang mit gleichzeitiger Verschweissung längs der gesamten Verbindungsstelle ermöglicht wird. Aus diesem Hauptvorteil ergibt sich als weiterer entscheidender Vorteil des vorliegenden Verfahrens, dass mit diesem Verfahren erstmalig eine rationelle Dichtschweissung von Rohrflanschen an Blechen und damit auch von Spunden an den Blechwänden von Stahlblechfässern ermöglicht wird, weil damit die bisher für diese Zwecke eingesetzten Dichtungen in Wegfall kommen können und demgemäss natürlich auch alle mit der Verwendung von Dichtungen verbundenen Probleme und Schwierigkeiten entfallen. So ist es beispielsweise bei Blechfässern mit dichtgeschweissten Spunden nicht mehr notwendig, für jeden der verschiedenen Verwendungszwecke der Fässer bzw. für jedes von einer Reihe von in Betracht kommenden unterschiedlichen Füllgütern gesonderte Chargen von Blechfässern mit an den jeweiligen Verwendungszweck bzw. das jeweils vorgesehene Füllgut angepassten Dichtungen herzustellen, sondern die Blechfässer mit dichtgeschweissten Spunden können wegen des Wegfalles von Dichtungen für jeden beliebigen Verwendungszweck bzw. für jedes beliebige Füllgut benutzt werden, was sowohl hinsichtlich der Vereinheitlichung des Fabrikationsprozesses als auch bezüglich der Lagerhaltung von ganz beträchtlichem Vorteil ist, einmal ganz abgesehen davon, dass eine Vereinheitlichung des Fabrikationsprozesses u. a. auch die Uebernahme sehr kurzfristiger Aufträge durch Belieferung aus der laufenden Produktion gestattet, während bei an das vorgesehene Füllgut anzupassenden Fässern eine Einplanung in den Fabrikationsprozess und damit erheblich grössere Lieferfristen erforderlich sind. Weitere Vorteile des mit dem vorliegenden Verfahren erzielbaren Wegfalls von Dichtungen ergeben sich bei speziellen Beanspruchungen wie beispielsweise hohen mechanischen Beanspruchungen, denen dichtgeschweisste Spunde in wesentlich höherem Masse als mit Dichtungen abgedichtete Spunde gewachsen sind, oder aber hohen Temperaturbeanspruchungen, die für dichtgeschweisste Spunde belanglos sind, bei mit Dichtungen abgedichteten Spunden jedoch zu Undichtigkeiten führen können, ferner auch bei Langzeitbeanspruchungen, denen dichtgeschweisste Spunde ohne weiteres gewachsen sind, während sie bei mit Dichtungen abgedichteten Spunden zu Alterungserscheinungen der Dichtungen und dadurch verursachten Undichtigkeiten führen können, und schliesslich bei sehr kostspielige Dichtungen erfordernden Füllgütern, wo mit dichtgeschweissten Spunden der hohe Aufwand für solche kostspieligen Dichtungen entfällt.

Von besonderem Vorteil für die Durchführung des vorliegenden Verfahrens ist es, wenn die an die Auflagefläche auf dem umgebogenen Rand des Bleches anzulegende Kontaktfläche des anderen Werstückes so ausgebildet wird, dass sie gegenüber den sie umgebenden Teilen des anderen Werkstücks hervorgehoben ist, so dass sich zumindest bis zum Schweissbeginn eine definierte begrenzte Fläche des Kontaktes zwischen den beiden Werkstücken und damit eine Begrenzung der sich aus der zum Schweissen erforderlichen Mindeststromdichte ergebenden notwendigen Mindeststromstärke bei Schweissbeginn ergibt. Denn zu den beim gleichzeitigen Schweissen langgestreckter Verbindungsstellen auftretenden Problemen gehört u. a. auch die Aufbringung eines genügend hohen Schweissstromes, weil sich natürlich bei einer gleichzeitig zu verschweissenden langgestreckten Verbindungsstelle beispielsweise im Vergleich zu der punktuellen Schweissung beim Rollennahtschweissen eine relativ grosse Schweissfläche ergibt, die in Verbindung mit den erfahrungsgemäss zu einer einwandfreien Schweissung erforderlichen Mindeststromdichten zu ausserordentlich hohen Schweissströmen führt, die nicht nur relativ grosse Schweisspressen und damit einen hohen maschinellen Aufwand bedingen sondern bei denen auch die Zuführung zu der vorgesehenen Verbindungsstelle oder genauer gesagt die gleichmässige Stromverteilung auf die einzelnen Teile derselben problematisch werden kann. Zur Geringhaltung der erforderlichen Schweissströme können ferner auch Massnahmen zur Verhinderung eines allzu starken Wärmeabflusses von der Schweissstelle in vorteilhafter Weise beitragen. In diesem Sinne ist es von wesentlichem Vorteil, wenn die an das Blech anzulegende Elektrode an den sich an den umgebogenen Rand anschliessenden Bereich des Bleches angelegt wird, so dass die an der Schweissstelle entstehende Wärme nur über den umgebogenen Rand auf die am Blech anliegende Elektrode abgeleitet werden kann und sich daher ein geringer Wärmeabfluss von der Schweissstelle zu der am Blech anliegenden Elektrode ergibt. Zur Verhinderung eines grösseren Wärmeabflusses von der Schweissstelle ist es weiter von Vorteil, wenn das genannte andere Werkstück so ausgebildet wird, dass die an die Auflagefläche auf dem umgebogenen Rand des Bleches anzulegende Kontaktfläche dieses anderen Werkstückes und die zum Anlegen der zugeordneten Elektrode an diesem Werkstück vorgesehene Fläche einen mittleren Abstand von mehr als einem Drittel, vorzugsweise von mehr als der Hälfte, der Breite des umgebogenen Randes des Bleches voneinander haben und die Breite der besagten Kontaktfläche kleiner als das Doppelte der Blechstärke des Bleches und vorzugsweise annähernd gleichgross wie dieselbe ist und dass die wirksame Querschnittsfläche für die Wärmeleitung zwischen der besagten Kontaktfläche und der zum Anlegen der Elektrode vorgesehenen Fläche kleiner als das Dreifache, vorzugsweise kleiner als das Doppelte, der besagten Kontaktfläche ist, so dass sich auch von der Schweissstelle zu der an dem genannten anderen Werkstück anliegenden Elektrode ein geringer Wärmeabfluss ergibt.

Bei der bevorzugten Form des vorliegenden Verfahrens wird für das Blech ein Material mit einem Spannungs-Dehnungs-Diagramm verwendet, bei dem die Spannung an der Fliessgrenze ein Vielfaches der Spannungsänderungen in dem innerhalb des Bereiches der Gleichmassdehnung liegenden Teil des Fliessbereiches beträgt, und die Elektroden werden vor der Einschaltung des Schweissstromes so stark gegeneinandergedrückt, dass der umgebogene Rand bis über die Fliessgrenze des Blechmaterials hinaus belastet wird und sich eine derartige weitere Verformung des umgebogenen Randes ergibt, dass innerhalb der im wesentlichen gleichmässigen Druckverteilung längs der Auflagefläche nur sehr geringe Druckschwankungen auftreten, bei denen das Verhältnis von Druckschwankung zu mittlerem Auflagedruck geringer als das Verhältnis der genannten Spannungsänderungen im Fliessbereich zur Spannung an der Fliessgrenze ist. Als Material zumindest für das Blech, vorzugsweise aber für beide Werkstücke, wird dabei vorteilhaft Stahl, vorzugsweise sogenannter unlegierter Baustahl, verwendet. Bei dieser bevorzugten Form des vorliegenden Verfahrens erfolgt die genannte Anpassung von nicht satt aneinander anliegenden Flächenteilen der besagten Auflagefläche und der auf dieser aufliegenden Kontaktfläche des anderen Werkstücks aneinander in wesentlichen durch plastische Verformung innerhalb des anfänglichen Teilstückes des Fliessbereiches, wo die Druckspannung mit geringen Schwankungen bei steigender Zusammenpressung gleichbleibend ist und sich daher nach der Anpassung von Auflagefläche und Kontaktfläche des anderen Werkstückes aneinander die besagte, im wesentlichen gleichmässige Druckverteilung längs der Auflagefläche ergibt.

Als vorteilhaft für die Durchführung des vorliegenden Verfahrens hat sich ferner herausgestellt, den Schweissstrom in Form von mehreren mit abwechselnder Polarität aufeinanderfolgenden Stromimpulsen von einer jeweils über mehrere Netzstromperioden reichenden, vorzugsweise im Bereich von 50 bis 200 msec liegenden Impulsdauer zuzuführen. Besonders geeignet hierfür sind sogenannte Frequenzwandler-Schweissmaschinen, mit denen über einen Dreiphasen-Transformator oder auch einen solchen in sechsphasiger Ausführung sowie einen Schweisstransformator und eine auf der Oberspannungsseite desselben angeordnete Gleichrichterschaltung Impulsfolgen der obengenannten Art mit Schweissströmen bis zu 500 kA und mehr erzeugt werden können.

Zweckmässig sollte bei dem vorliegenden Verfahren die den Druck der Elektroden gegeneinander und damit den Druck auf die Schweissstelle bewirkende Kraft während der Einschaltdauer des Schweissstromes, vorzugsweise in gleichbleibender Höhe, aufrechterhalten werden.

Das vorliegende Verfahren kann mit besonderem Vorteil zum Widerstandsschweissen von zwei längs einer kreisrunden Verbindungsstelle zu verbindenden Werkstücken eingesetzt werden, weil sich in diesem Fall die oben schon erwähnte gleichmässige Stromverteilung auf die einzelnen Teile der Verbindungsstelle aus Symmetriegründen sozusagen von selbst ergibt ; die zu dem Gegeneinanderdrücken der Elektroden erforderliche Relativbewegung der Elektroden aufeinander zu sollte bei kreisrunden Verbindungsstellen zweckmässig mindestens annähernd in Normalenrichtung zur Kreisebene des von der Verbindungsstelle gebildeten Kreises erfolgen.

Bei einer besonders vorteilhaften Ausführungsform des vorliegenden Verfahrens wird der Rand des Bleches um mindestens annähernd 180° umgebogen, so dass sich ein im wesentlichen u-förmiger Querschnitt des umgebogenen Randes sowie des sich anschliessenden Bereiches des Bleches ergibt, denn mit einem in dieser Weise umgebogenen Rand lässt sich die erwähnte elastisch nachgebende Auflagefläche bzw. das federnde Nachgeben des umgebogenen Randes besonders gut realisieren. Bei kreisrunden Verbindungsstellen ist es zusätzlich zu diesem Umbiegen des Blechrandes um etwa 180° von wesentlichem Vorteil, wenn der sich an den umzubiegenden Rand anschliessende Bereich des Bleches derart wannenförmig eingebuchtet wird, dass der umgebogene Rand innerhalb der wannenförmigen Einbuchtung liegt und die den umgebogenen Rand abschliessende Kante bis nahe an die Wand der wannenförmigen Einbuchtung heranreicht, so dass sich die Kante im Verlaufe der genannten weiteren Verformung des umgebogenen Randes auf der Wand der wannenförmigen Einbuchtung abstützen kann ; dass genannte andere Werkstück ist in dem Fall vorzugsweise so auszubilden, dass die Kontaktfläche desselben im mittleren Bereich des oberen Schenkels des u-förmig umgebogenen Randes auf dem umgebogenen Rand aufliegt.

Der Vorteil einer solchen wannenförmigen Einbuchtung und der damit gegebenen Abstützungsmöglichkeit für die Kante des umgebogenen Randes auf der Wand der wannenförmigen Einbuchtung liegt darin, dass die sich bei der genannten, unter dem Druck der Elektroden und damit der Werkstücke gegeneinander erfolgenden weiteren Verformung des umgebogenen Randes zunächst ergebende leichte Schräglage des oberen Schenkels des u-förmig umgebogenen Randes nach erfolgter Abstützung der Kante des umgebogenen Randes auf der Wand der wannenförmigen Einbuchtung mit der anschliessenden weiteren Verformung des umgebogenen Randes wieder aufgehoben wird und daher keine Beeinträchtigung des zu erzielenden satten Aufliegens der Auflagefläche auf dem umgebogenen Rand und der auf dieser aufliegenden Kontaktfläche des anderen Werkstückes mehr darstellt. Aus diesen Gründen kann eine entsprechende Einbuchtung des Bleches auch bei geradlinigen und anderen nicht kreisförmigen Verbindungsstellen von beträchlichem Vorteil sein. Ein weiterer Vorteil der wannenförmigen Einbuchtung ergibt sich im Zusammenhang mit in Bodenbleche von Stahlfässern eingeschweissten Spunden insofern, als durch die Einbuchtung erreicht wird, dass die Oberseite des eingeschweissten Spundes in gleicher Höhe wie die Innenseite des Bodenbleches liegt und daher eine vollständige Leerung des Fasses nicht dadurch behindert wird, dass die Eintrittsöffnung des Spundes höher als die Innenseite des Bodenbleches liegt.

Falls keine solche Einbuchtung des Bleches vorhanden ist, empfiehlt es sich, den Rand des Bleches um mehr als 180°, vorzugsweise um 225 bis 360°, umzubiegen, so dass sich ein im wesentlichen in sich geschlossener, vorzugsweise annähernd ovaler oder runder Querschnitt des umgebogenen Randes ergibt, wobei dann anstelle der obenerwähnten Abstützung der Kante des umgebogenen Randes auf der Wand der wannenförmigen Einbuchtung die weitere Umbiegung des Randes und damit die Abstützung desselben auf seinem noch weiter umgebogenen Kantenbereich tritt.

Die Erfindung betrifft weiter noch eine Anwendung des vorliegenden Verfahrens zur flüssigkeitsdichten Anbringung eines Spundes in einem zur Herstellung eines Stahlblech-Fasses oder -Behälters vorgesehenen Blechteil, für die kennzeichnend ist, dass das genannte Blech das zur Herstellung des Stahlblech-Fasses oder -Behälters vorgesehene, mit einem Loch an der vorgesehenen Anbringungsstelle des Spundes versehene Blechteil, die genannte Kante des Bleches die Kante dieses Loches und das genannte andere Werkstück der anzubringende Spund ist. Vorzugsweise umfasst der Spund bei dieser Anwendung ein rohrförmiges, innen zumindest auf einem Teil der Rohrlänge mit einem Gewinde versehenes Teil sowie einen einstückig mit dem rohrförmigen Teil verbundenen Flansch am einen Ende des rohrförmigen Teiles, an dessen einer Flanschseite die an die genannte Auflagefläche anzulegende Kontaktfläche vorgesehen ist und an dessen andere Flanschseite eine der Elektroden angelegt wird, und der den genannten Rand des Bleches bildende Rand des in dem Blechteil vorgesehenen Loches wird bei dieser Anwendung vorzugsweise derart umgebogen, dass die lichte Weite des nach dem Umbiegen des Lochrandes vergrösserten Loches grösser und vorzugsweise annähernd gleichgross wie der Aussendurchmesser des rohrförmigen Teiles des Spundes ist.

Anhand der nachstehenden Figuren ist die Erfindung im folgenden an einem Ausführungsbeispiel näher erläutert. Es zeigen :

Figur 1 einen Teilschnitt einer Einrichtung zur Durchführung eines ersten Verfahrensschrittes des vorliegenden Verfahrens, der in dem Tiefziehen einer wannenförmigen Einbuchtung in ein mit einem Loch versehenes Blech und dem gleichzeitigen ersten Schritt des Umbiegens des Lochrandes besteht,

Figur 2 einen Teilschnitt einer Einrichtung zur Durchführung eines zweiten Verfahrensschrittes des vorliegenden Verfahrens, der in einem zweiten Schritt des Umbiegens des Lochrandes mit konusförmiger Aufweitung des im ersten Schritt umgebogenen Randes besteht,

Figur 3 einen Teilschnitt einer Einrichtung zur Durchführung eines dritten Verfahrensschrittes des vorliegenden Verfahrens, der in einem dritten und letzten Schritt des Umbiegens des Lochrandes besteht, bei dem eine Gesamtumbiegung von ca. 180° erreicht wird,

Figur 4 einen Teilschnitt der zur Durchführung eines vierten Verfahrensschrittes des vorliegenden Verfahrens vorgesehens Schweisspresse mit den beiden miteinander zu verschweissenden Werkstücken und den an diesen anliegenden Elektroden vor Beginn des Gegeneinanderdrückens der Elektroden und der anschliessenden Verschweissung und

Figur 5 den Teilschnitt in Fig. 4 nach der Verschweissung der beiden Werkstücke miteinander.

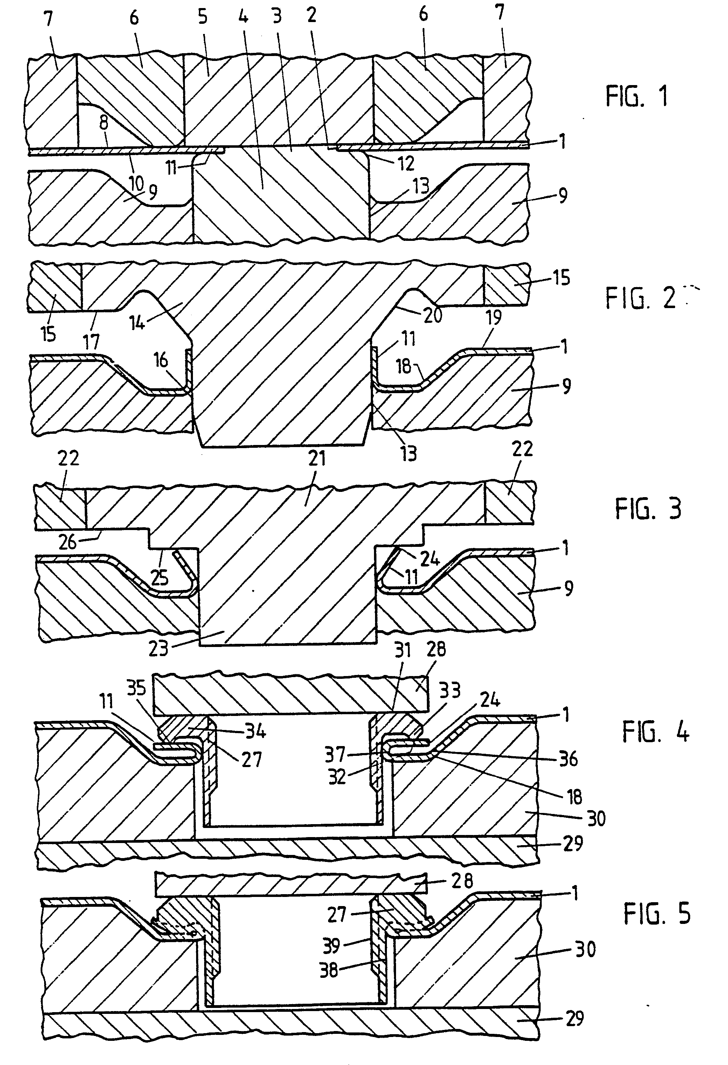

Bei dem in den Figuren 1 bis 5 in Form von verschiedenen Verfahrensstadien dargestellten Ausführungsbeispiel des vorliegenden Verfahrens handelt es sich um das Einschweissen eines Spundes in ein als Deckel- oder Bodenblech für ein Blechfass vorgesehenes Blechteil 1. Das an der vorgesehenen Anbringungsstelle des Spundes mit einem kreisrunden Loch 2 versehene Blechteil 1 wird zunächst in einem ersten Verfahrensschritt in die im Teilschnitt in Fig. 1 dargestellte Ziehpresse eingelegt und mit dem Loch 2 auf dem als Zentrierorgan vorgesehenen, etwa den gleichen Durchmesser wie das Loch 2 aufweisenden kreisrunden Aufsatz 3 auf der Ziehmatrize 4 zentriert und dann durch gleichzeitiges Heranfahren des Niederhalters 5 sowie des Ziehstempels 6 und des Pressringes 7 an die Blechoberseite 8 und ferner der Ziehform 9 an die Blechunterseite 10 des Blechteils 1 fixiert, wobei der Pressring 7 und die Ziehform 9 so stark gegeneinandergedrückt werden, dass die an diesen anliegenden Flächenteile des Blechteils 1 während des anschliessenden Ziehvorganges von denselben festgehalten werden. Anschliessend werden Ziehstempel 6 und Ziehmatrize 4 zusammen mit Niederhalter 5 in entgegengesetzter Richtung bewegt, und zwar der Ziehstempel 6, bis sich die Unterseite 10 des Blechteils 1 vollständig und die Ziehform 9 und die Oberseite 8 des Blechteils 1 entsprechend an den Ziehstempel 6 angelegt hat, und die Ziehmatrize 4 zusammen mit dem Niederhalter 5, bis sich die Unterseite des Lochrandes 11 vollständig an den zylindrischen Teil der Ziehmatrize 4 und die Oberseite des Lochrandes 11 entsprechend an den zylindrischen Teil des Ziehstempels 6 angelegt hat. Bei dem Ziehvorgang wird also praktisch das Blechteil 1 in die Ziehform 9 gedrückt und gleichzeitig der Lochrand 11 um 90° umgebogen. Das Blechteil 1 hat somit nach dem Ziehvorgang die in Fig. 2 gezeigte Form. Das Gleiche kann im übrigen auch ohne den Niederhalter 5 erreicht werden, wobei aber dann zweckmässig die in diesem Fall als Stempel wirkende Ziehmatrize 4 an ihrer oberen Kante 12 stärker abzurunden ist. Nach dem Ziehvorgang werden zuerst der Niederhalter 5 und der Ziehstempel 6 nach oben zu und anschliessend gleichzeitig der Pressring 7 nach oben zu und die Ziehmatrize 4 nach unten zu weggezogen, so dass das Blechteil 1 in der Ziehform 9 verbleibt. Die Ziehmatrize 4 wird dabei aus der für dieselbe in der Ziehform 9 vorgesehenen zentralen Oeffnung 13 herausgezogen, so dass die Ziehform 9 mit dem darin verbliebenen Blechteil 1 anschliessend in seitlicher Richtung verschoben werden kann. Damit ist der erste Verfahrensschritt beendet, und die Ziehform 9 mit dem Blechteil 1 wird nun auf einem Revolvertisch durch Drehung desselben um 120° zur Durchführung eines zweiten Verfahrensschrittes unter den Aufweitungsstempel 14 gefahren. Anschliessend wird der Aufweitungsstempel 14 zusammen mit dem Abstreifring 15 nach unten bewegt und dabei zunächst der zylindrische Teil 16 des Aufweitungsstempels 14 in den um 90° umgebogenen Lochrand 11 und danach in die zentrale Oeffnung 13 in der Ziehform 9 eingefahren, womit gleichzeitig eine Zentrierung des Blechteils 1 sowie der Ziehform 9 auf den Aufweitungsstempel 14 erfolgt. Die Fig. 2 zeigt dieses Verfahrensstadium, in dem der zylindrische Teil 16 des Aufweitungsstempels 14 vollständig in den umgebogenen Lochrand 11 sowie die Oeffnung 13 eingefahren ist. Die Bewegung des Aufweigungsstempels 14 sowie des Abstreifringes 15 nach unten zu wird jedoch über das in Fig. 2 gezeigte Stadium hinaus fortgesetzt, bis der Abstreifring 15 und der äussere Rand 17 des Aufweitungsstempels 14 auf den die Wannenförmige Einbuchtung 18 in dem Blechteil 1 umgebenden Flächenteilen 19 des Blechteils 1 aufsetzen, wobei in diesem Bewegungsabschnitt zwischen dem in Fig. 2 gezeigten Stadium und dem Aufsetzen von Aufweitungsstempel 14 und Abstreifring 15 auf dem Blechteil 1 dann von dem konischen Teil 20 des Aufweitungsstempels 14 der bisher um 90° umgebogene Lochrand 11 konisch aufgeweitet und damit bis auf ca. 125° umgebogen wird. Das Blechteil 1 hat somit nach dem Aufweitungsvorgang die in Fig. 3 gezeigte Form. Danach wird zunächst der Aufweitungsstempel 14 nach oben zu zurückgezogen, bis der zylindrische Teil 16 desselben das Blechteil 1 bzw. den um 125° umgebogenen Lochrand 11 nicht mehr berührt und der Aufweitungsstempel 14 daher das Blechteil 1 bei seiner Bewegung nach oben nicht mehr mitnehmen kann, und dann wird auch der Abstreifring 15 nach oben zu zurückgezogen, so dass also das Blechteil 1 wiederum in der Ziehform 9 verbleibt. Damit ist der zweite Verfahrensschritt beendet, und die Ziehform 9 mit dem Blechteil 1 wird nun auf dem schon genannten, nicht dargestellten Revolvertisch durch weitere Drehung desselben um wiederum 120° zur Durchführung eines dritten Verfahrensschrittes unter den Biegestempel 21 gefahren. Anschliessend wird der Biegestempel 21 zusammen mit dem Abstreifring 22 nach unten bewegt und dabei zunächst der untere zylindrische Teil 23 des Biegestempels 21 in den um 125° umgebogenen Lochrand 11 und danach in die zentrale Oeffnung 13 in der Ziehform 9 eingefahren, womit gleichzeitig eine Zentrierung des Blechteils 1 sowie der Ziehform 9 auf den Biegestempel 21 erfolgt. Die Fig. 3 zeigt dieses Verfahrensstadium, in dem der untere zylindrische Teil 23 des Biegestempels 21 so weit in den umgebogenen Lochrand 11 sowie die Oeffnung 13 eingefahren ist, dass die Kante 24 des um 125° umgebogenen Lochrandes 11 gerade die eigentliche Stempelfläche 25 des Biegestempels 21 berührt. Die Bewegung des Biegestempels 21 sowie des Abstreifringes 22 nach unten zu wird jedoch über das in Fig. 3 gezeigte Stadium hinaus fortgesetzt, bis der Abstreifring 22 und der äussere Rand 26 des Biegestempels 21 auf den die wannenförmige Einbuchtung 18 in dem Blechteil 1 umgebenden Flächenteilen 19 des Blechteils 1 aufsetzen, wobei in diesem Bewegungsabschnitt zwischen dem in Fig. 3 gezeigten Stadium und dem Aufsetzen von Biegestempel 21 und Abstreifring 22 auf dem Blechteil 1 dann von der Stempelfläche 25 des Biegestempels 21 der bisher um 125° umgebogene Lochrand 11 weiter bis auf ca. 180° umgebogen wird. Das Blechteil 1 hat somit nach diesem Biegevorgang die in Fig. 4 gezeigte Form. Danach wird zunächst der Biegestempel 21 nach oben zu zurückgezogen, bis der untere zylindrische Teil 23 desselben das Blechteil 1 bzw. den um 180° umgebogenen Lochrand 11 nicht mehr berührt und der Biegestempel 21 daher das Blechteil 1 bei seiner Bewegung nach oben nicht mehr mitnehmen kann, und dann wird auch der Abstreifring 22 nach oben zu zurückgezogen, so dass also auch diesmal das Blechteil 1 in der Ziehform 9 verbleibt. Damit ist der dritte Verfahrensschritt beendet, und das Blechteil 1 wird nunmehr aus der Ziehform 9 entnommen, und anschliessend wird die damit leere Ziehform 9 durch weitere Drehung des Revolvertisches um 120° wieder unter den Ziehstempel 6 sowie den Pressring 7 und den Niederhalter 5 gefahren und nach Hochschieben der Ziehmatrize 4 durch die zentrale Offnung 13 der Ziehform 9 hindurch ein neues Blechteil auf den Aufsatz 3 aufgesetzt, wonach sich die beschriebenen drei Verfahrensschrittes mit dem neuen Blechteil wiederholen. Werden auf dem Revolvertisch im Winkelabstand von je 120° drei Ziehformen 9 angeordnet und gleichzeitig mit jedem Ziehvorgang auf der um 120° vorangehenden Ziehform der Aufweitungsvorgang und auf der um 240° vorangehenden Ziehform der Biegevorgang durchgeführt, dann kann mit jedem Takt an der den Biegevorgang durchführenden Station ein fertiges Blechteil 1 in der in Fig. 4 gezeigten Form entnommen und ein neues Blechteil 1 in der in Fig. 1 gezeigten Form in die den Ziehvorgang durchführende Station eingesetzt werden, so dass also mit jedem Takt bzw. mit jeder gleichzeitig an verschiedenen Blechteilen erfolgenden Durchführung von Ziehvorgang, Aufweitungsvorgang und Biegevorgang ein Blechteil 1 in der in Fig. 4 gezeigten Form fertiggestellt wird. Zur Erhöhung der Fertigungsgeschwindigkeit kann ferner zusätzlich zu den das Ziehen, Aufweiten und Biegen durchführenden drei Stationen noch eine vierte, nur für die Entnahme des fertigen Blechteils dienende Station vorgesehen werden, wobei dann allerdings die vier Stationen im Winkelabstand von 90° anzuordnen sind und natürlich auch vier im Winkelabstand von 90° auf dem Revolvertisch angeordnete Ziehformen 9 vorzusehen sind und der Revolvertisch nach jedem Takt um 90° zu drehen ist. Durch die zusätzliche Entnahmestation wird die Fertigungsgeschwindigkeit deswegen erhöht, weil bei nur drei Stationen die Entnahme des fertigen Blechteils, die Drehbewegung des Revolvertisches und das Einsetzen des neuen Blechteils zeitlich nacheinander erfolgen müssen, während bei Vorhandensein einer zusätzlichen Entnahmestation die Entnahme des fertigen Blechteils und das Einsetzen des neuen Blechteils nach erfolgter Drehbewegung des Revolvertisches gleichzeitig erfolgen können. In konstruktiver Hinsicht ist noch darauf hinzuweisen, dass die das Ziehen, Aufweiten und Biegen durchführenden drei Stationen bei geeigneter konstruktiver Ausbildung von ein und derselben Presse betätigt werden können. Nach der Entnahme des fertigen Blechteils 1 aus der den Biegevorgang durchführenden Station bzw. der Entnahmestation wird das Blechteil 1 durch eine Beschickungsstation geleitet, wo der Spund 27 in die von dem um 180° umgebogenen Lochrand 11 umschlossene Oeffnung eingeschoben wird, und anschliessend wird das mit dem eingeschobenen Spund 27 versehene Blechteil 1 wie in Fig. 4 gezeigt in eine Schweisspresse mit der in Vertikalrichtung beweglichen Elektrode 28 und der auf dem Elektrodenteller 29 der Schweisspresse fest montierten Elektrode 30 eingesetzt.

Im Anschluss daran wird der eigentliche Hauptverfahrensschritt des vorliegenden Verfahrens, also das flüssigkeits- und gasdichte Verschweissen des Spundes 27 mit dem Blechteil 1 bzw. dem umgebogenen Lochrand 11 desselben, durchgeführt. Denn während die bisher beschriebenen Verfahrensschritte im Prinzip nur vorbereitenden Charakter haben und gegebenenfalls auch durch andere Verfahrensschritte bzw. andere Blechbearbeitungsmethoden ersetzt werden können, wenn diese zum gleichen Ergebnis, also im vorliegenden Ausführungsbeispiel zu der in Fig. 4 gezeigten Form des Blechteils 1, führen, ist der eigentliche Hauptverfahrensschritt der Durchführung einer Dichtschweissung zwischen einem Spund und einem Blech im Prinzip in allen Fällen gleich : Der mit einem Flansch und einem als Ringbuckel mit sehr grossem Durchmesser bezeichenbaren ringförmigen Vorsprung an der Flanschunterseite versehene Spund wird mit grosser Presskraft mit dem Vorsprung auf ein zunächst elastisch und dann zumindest an der Auflagefläche des Vorsprunges plastisch nachgebendes ringförmiges Flächenteil des Bleches gedrückt, wobei sich bei dieser Verformung die Auflagefläche und die auf dieser aufliegende Ringfläche des Vorsprunges so aneinander anpassen, dass die Auflagefläche und die Ringfläche nicht nur an einzelnen Punkten sondern über ihre gesamten Flächen satt aneinander anliegen und sich eine gleichmässige Druckverteilung über diese Flächen ergibt, die dann nach Einschaltung des Schweissstromes zu einer gleichmässigen Stromverteilung über diese Flächen und damit zu einer gleichzeitigen lückenlosen Verschweissung der beiden Flächen miteinander führt.

Im einzelnen wird der den Hauptverfahrensschritt darstellende vierte Verfahrensschritt folgendermassen durchgeführt: Nach dem Einsetzen des mit dem eingeschobenen Spund 27 versehenen Blechteils 1 in die Elektrode 30 wird die Elektrode 28 nach unten bewegt und dabei zunächst bis an die Oberseite 31 des Spundes 27 herangefahren. Die Fig. 4 zeigt dieses Verfahrensstadium, in dem das Blechteil 1 in die Elektrode 30 eingesetzt und die Elektrode 28 bis an den in das Blechteil 1 eingeschobenen Spund 27 herangefahren ist. Die Bewegung der Elektrode 28 nach unten wird jedoch über das in Fig. 4 gezeigte Stadium hinaus fortgesetzt, wobei die Elektrode 28 vom Moment des Aufsetzens auf der Oberseite 31 des Spundes 27 an mit einer Presskraft von 2 000 kg beaufschlagt wird. Durch diese Presskraft wird von der auf der Auflagefläche 32 auf dem umgebogenen Lochrand 11 aufliegenden, einen Durchmesser von 69 mm und eine Breite von 1/2 mm aufweisenden, an einem Vorsprung 33 an der Unterseite des Spundflansches 34 vorgesehenen Kontaktfläche 35 ein mittlerer Druck von ca. 18 kg/mm$^2$ auf die Auflagefläche 32 ausgeübt, wobei der tatsächliche Druck infolge einer sich bei dem oben beschriebenen Biegevorgang ergebenden leicht konvexen Krümmung der Auflagefläche 32 in der Regel noch wesentlich höher liegt und bis zum etwa Fünffachen des mittleren Druckes betragen kann. Da der tatsächliche Druck damit über der zwischen ca. 30 und 50 kg/mm$^2$ liegenden Druckfestigkeit des unlegierten Baustahls liegt, aus dem der Spund 27 und das Blechteil 1 bestehen, führt die auf den Spund 27 ausgeübte Presskraft zu einer plastischen Verformung der Auflagefläche 32 und/oder der Kontaktfläche 35, nachdem zuvor die Kante 24 des umgebogenen Lochrandes 11 bis zur Abstützung an der Wand 36 der wannenförmigen Einbuchtung 18 des Blechteils 1 heruntergedrückt und der sich damit einerseits auf seiner Biegungsstelle 37 und andererseits mit der Kante 24 auf der Wand 36 abstützende umgebogene Lochrand 11 noch etwas weiter durchgedrückt worden ist. Durch das Hinunterdrücken des Lochrandes 11, das bis auf eine eventuelle plastische Verformung der Biegungsstelle 37 vor der Abstützung der Kante 24 auf der Wand 36 innerhalb des elastischen Verformungsbereiches erfolgt, werden eventuelle Ungenauigkeiten in der Parallelität der Elektrodenkontaktflächen und/oder in der Parallelität der Ebenen, in die die Oberseite 31 und die Kontaktfläche 35 des Spundes 27 fallen, und/oder in der Parallelität der Ebenen, in die die Flächenteile 19 des Blechteils 1 und die Auflagefläche 32 auf dem umgebogenen Lochrand 11 fallen, ausgeglichen, und durch die plastische Verformung der Auflagefläche 32 und/oder der Kontaktfläche 35 passen sich diese aufeinander aufliegenden Flächen so aneinander an, dass sie nicht nur an einzelnen Punkten sondern über ihre gesamten Flächen satt aneinander anliegen und sich daher eine gleichmässige Druckverteilung über diesen Flächen ergibt. Der Ausgleich von Parallelitätsungenauigkeiten ist deswegen von wesentlicher Bedeutung, weil sich bei einer Massenproduktion solche Parallelitätsungenauigkeiten niemals völlig vermeiden lassen und ohne einen solchen Ausgleich, wie eingangs schon erläutert, ja bereits ganz geringfügige, in der Grössenordnung von wenigen Mikron liegende Ungenauigkeiten zu beträchtlichen Druckschwankungen längs der aufeinander aufliegenden Flächen von Spund 27 und Blechteil 1 führen können, und das satte Aneinanderanliegen von Auflagefläche 32 und Kontaktfläche 35 und die sich damit ergebende gleichmässige Druckverteilung über diesen Flächen ist deswegen erforderlich, damit sich beim Einschalten des Schweissstromes die für eine gleichzeitige lückenlose Verschweissung der beiden Flächen miteinander notwendige gleichmässige Stromverteilung über diesen Flächen ergibt. Nach dem Hinunterdrücken des Spundes 27 und damit des umgebogenen Lochrandes 11 durch die Elektrode 28 und dem damit erzielten satten Aneinanderanliegen der Auflagefläche 32 und der Kontaktfläche 35 wird der Schweissstrom eingeschaltet, der im vorliegenden Ausführungsbeispiel von einer dreiphasigen Frequenzwandler-Schweissmaschine mit einer Nennleistung von 200 kVA bei 50 % Einschaltdauer und einer Maximalleistung von ca. 350 bis 380 kVA geliefert wird und aus mehreren mit abwechselnder Polarität aufeinanderfolgenden Stromimpulsen von einer Impulsdauer von 100 bis 150 msec und einer Höhe von 100 bis 150 kA besteht und über eine Gesamtdauer von 0,5 bis 1 sec eingeschaltet bleibt. Durch diesen Schweissstrom wird die Unterseite des Spundflansches 34 vollständig mit dem umgebogenen Lochrand 11 verschweisst, wobei der Vorsprung 33 an der Unterseite des Spundflansches 34 vollständig in das sich bei der Schweissung erweichende Material des umgebogenen Lochrandes 11 einsinkt und der umgebogene Lochrand 11 selbst ebenfalls wegen der Erhitzung und der sich damit ergebenden Materialerweichung bei der Schweissung bis auf die unter ihm liegenden Bereiche des Blechteils 1 herabgedrückt wird und sich dementsprechend auch plastisch verformt. Die Fig. 5 zeigt den mit dem Blechteil 1 flüssigkeits- und gasdicht verschweissten Spund 27 nach der Schweissung. Irgendwelche Veränderungen des rohrförmigen Teiles 38 des Spundes 27 oder des darin vorgesehenen Gewindes 39 wie z. B. ein Verziehen des letzteren hat die Schweissung nicht zur Folge. Daher kann der rohrförmige Teil 38 des Spundes 27 mit dem Gewinde 39 ohne weiteres so ausgebildet sein, dass in Verbindung mit dem Spund 27 die gleichen normierten Sicherungsbleche, Siegelkappen und Abfülleinrichtungen wie bei den bisher üblichen, mit Dichtungen abgedichteten Spunden verwendet werden können, was zweifellos von beträchtlichem Vorteil ist. Da die sich am Ende der Schweissung ergebende Breite der Schweissstelle relativ gross ist und, wie in Fig. 5 ersichtlich, über die gesamte Flanschbreite reicht, ist mit undicht oder ungenügend dicht eingeschweissten Spunden bzw. mit Ausschuss bei der Produktion nicht zu rechnen, im Gegenteil werden auch bei Veränderungen der Einstellung der Schweissmaschine in relativ weiten Grenzen noch vollkommen dichte Schweissstellen erzielt, so dass die Schweissmaschineneinstellung absolut nicht kritisch ist. Die grosse Breite der Schweissstelle ergibt sich deswegen, weil aus den oben schon erläuterten Gründen der Wärmeabfluss von der Schweisstelle relativ gering ist und daher mitin Bezug auf die Grösse der Schweissstelle relativ geringen Schweissströmen gearbeitet werden kann, die wiederum eine relativ lange Schweissdauer und damit eine Ausbreitung der Schweissung von der anfangs auf die Kontaktfläche 35 und die Auflagefläche 32 beschränkten Schweissstelle auf die gesamte Flanschbreite erlauben. Aufgrund der unkritischen Einstellung und der vernachlässigbaren Ausschussgefahr lassen sich in Verbindung mit den oben beschriebenen Verfahrensschritten Produktionsziffern bis zu 1 000 Stück pro Stunde und mehr erreichen. Wie schon erwähnt wird bei dem beschriebenen Ausführungsbeispiel der notwendige Ausgleich von Parallelitätsungenauigkeiten durch das besagte, im wesentlichen im elastischen Verformungsbereich erfolgende Hinunterdrücken des umgebogenen Lochrandes 11 unter Mitwirkung der Abstützung der Kante 24 auf der Wand 36 der wannenförmigen Einbuchtung 18 in dem Blech 1 bewirkt. Das erfordert aber natürlich, wie in Fig. 4 ersichtlich, eine bestimmte Grösse der wannenförmigen Einbuchtung 18 bzw. eine Abstimmung der Grösse der Einbuchtung 18 und der Breite des umgebogenen Lochrandes 11 aufeinander, und in allen den Fällen, in denen aus technischen Gründen grössere wannenförmige Einbuchtungen benötigt werden oder eine solche Einbuchtung überhaupt nicht erwünscht ist und daher die Möglichkeit der Abstützung der Kante 24 an einer Einbuchtungswand entfällt, muss der besagte notwendige Ausgleich von Parallelitätsungenauigkeiten auf eine andere Weise erfolgen. Der Fall der benötigten grösseren Einbuchtung ist anhand der Fig. 4 leicht vorstellbar, indem man sich die Kante 24 ein Stück nach innen zu versetzt denkt. In diesem Fall würde sich beim Hinunterdrücken des umgebogenen Lochrandes 11 eine Schräglage der der Auflagefläche 32 gegenüber der Kontaktfläche 35 ergeben, wenn die Kante 24 unten aufsetzt. Zur Vermeidung einer solchen Schräglage wird bei dem anhand der Fig. 3 beschriebenen Biegevorgang der Biegestempel 21 soweit hinuntergedrückt, dass der umgebogene Lochrand 11 am Ende des Biegevorganges unter dem Pressdruck des Biegestempels 21 nahezu flach auf dem darunterliegenden Teil des Bleches 1 aufliegt und beim Zurückziehen des Biegestempels 21 nur ein kleines Stück zurückfedert. Der Lochrand 11 ist damit wiederum, ebenso wie bei dem oben beschriebenen Ausführungsbeispiel des vorliegenden Verfahrens, um ca. 180° umgebogen, aber bei dem erwähnten Hinunterdrücken des umgebogenen Lochrandes 11 ergibt sich keine Schräglage der Auflagefläche 32 gegenüber der Kontaktfläche 35 mehr, weil dieses Hinunterdrücken ja nur über das besagte kleine Stück möglich ist, um das der umgebogene Lochrand 11 beim Zurückziehen des Biegestempels 21 zurückgefedert war. Dieses kleine Stück, um das der umgebogene Lochrand hinuntergedrückt werden kann, reicht aber nun in der Regel für den besagten notwendigen Ausgleich von Parallelitätsungenauigkeiten nicht mehr aus. Daher wird in diesem Fall eine andere bekannte Art des Ausgleiches von Parallelitätsungenauikkeiten wie z. B. die gelenkige Lagerung einer der beiden Elektroden mit Hilfe eines Kugelgelenkes mit einer an der Elektrode angebrachten Halbkugel und einer in dem Lagerorgan dieser Elektrode vorgesehenen entsprechenden Kugelpfanne angewendet, wobei Kugelpfanne und Halbkugel gross genug bemessen werden, dass sich bei eingeschaltetem Schweissstrom keine grössere Stromdichten an der Kontaktfläche Kugelpfanne/Halbkugel ergeben. Da der umgebogene Lochrand 11 nach dem erwähnten Hinunterdrücken wieder nahezu flach auf dem darunterliegenden Teil des Bleches 1 aufliegt, ergibt sich ein geringerer Widerstand der Schweissstelle als bei dem beschriebenen Ausführungsbeispiel, so dass eine Schweissmaschine mit höherer Leistung, z. B. einer Nennleistung von 250 KVA bei 50 % Einschaltdauer und einer Maximalleistung von 500 KVA, die Stromimpulse in einer Höhe von 200 bis 250 KA liefert, erforderlich wird und wegen des höheren Schweissstromes auch eine höhere Presskraft der Elektroden gegeneinander von z. B. 3 000 kg anzuwenden ist. Damit sich trotz der höheren Presskraft ein etwa gleicher mittlerer Druck der Kontaktfläche 35 auf die Auflagefläche 32 von ca. 18 kg/mm² wie bei dem beschriebenen Ausführungsbeispiel ergibt, wird die Kontaktfläche 35 an dem Vorsprung 33 an der Unterseite des Spundflansches 34 auf ca. 0,8 mm verbreitert.

Insbesondere in den Fällen, in denen eine Einbuchtung des Bleches 1 nicht erwünscht ist, aber auch dann, wenn auf eine Anpassung der Elektrode 30 an eine grössere wannenförmige Einbuchtung in dem Blech 1 verzichtet werden soll, sind ferner anstelle der bei dem beschriebenen Ausführungsbeispiel vorgesehenen Zentrierung durch die und die Wannenförmige Einbuchtung 18 angepasste Elektrode 30 andere Zentrierungsmassnahmen vorzusehen. Beispielsweise kann die bewegliche Elektrode mit einem isoliert angeordneten, koaxial innerhalb der Elektrode beweglichen und gefederten, vorn leicht konisch verjüngten Bolzen von näherungsweise gleichem Durchmesser wie dem Innendurchmesser des Spundes 27 versehen werden, der vor Beginn der Bewegung der Elektrode auf den Spund zu vorn aus derselben herausragt und daher bei der Bewegung derselben mit seinem vorderen verjüngten Ende in den Spund 27 einfährt und den Spund dadurch zentriert, bevor die bewegliche Elektrode auf das zugeordnete Werkstück aufsetzt. Gleichzeitig mit dieser Zentrierung des Spundes 27 wird auch der umgebogene Rand 11 des Bleches 1 zentriert, weil der Spund 27 und der umgebogene Rand 11 entweder — wie in Fig. 4 ersichtlich — dadurch, dass der Spund 27 genau in das nach dem Umbiegen des Lochrandes 11 vergrösserte Loch passt, oder z. B. dadurch, dass am inneren Umfang dieses vergrösserten Loches in untereinander gleichen Winkelabständen 3 oder mehr Zentriernocken vorgesehen sind (die beispielsweise in der Endphase des dritten Verfahrensschrittes oder zwischen dem dritten und vierten Verfahrensschritt angebracht werden können) und der Spund 27 genau in den von den Zentriernocken fixierten Kreis passt, aufeinander zentriert sind.

Allgemein ist somit darauf hinzuweisen, dass sowohl für den notwendigen Ausgleich von Parallelitätsungenauigkeiten als auch für die Zentrierung der Werkstücke anstelle der bei dem beschriebenen Ausführungsbeispiel des vorliegenden Verfahrens angewandten Massnahmen auch andere für diese Zwecke bekannte Massnahmen angewendet werden können.

**Patentansprüche**

1. Verfahren zum elektrischen Widerstandsschweissen von zwei längs einer langgestreckten, insbesondere kreisartig in sich geschlossenen Verbindungsstelle (32, 35) flüssigkeits- und/oder gasdicht miteinander zu verbindenden Werkstücken (1, 27), von denen mindestens eines ein Blech (1) ist, das nahe der vorgesehenen Verbindungsstelle (32, 35) eine entlang derselben verlaufende Kante aufweist und aus einem biegbaren und bei Beanspruchung über seine Streckgrenze hinaus fliessfähigem Material besteht, dadurch gekennzeichnet, dass zunächst der sich an die genannte Kante anschliessende Rand (11) des Bleches (1) entlang der vorgesehenen Verbindungsstelle (32/35) derart umgebogen wird, dass sich für das andere (27) der beiden zu verbindenden Werkstücke (1, 27) auf dem umgebogenen Rand (11) des Bleches (1) eine bei Druck der beiden Werkstücke (1, 27) gegeneinander zunächst elastisch nachgebende, entlang der vorgesehenen Verbindungsstelle verlaufende Auflagefläche (32) ergibt, und dass danach die beiden Werkstücke (1, 27) aneinander angelegt und an die beiden Werkstücke Elektroden (28, 30) so angelegt werden, dass bei gegeneinandergerichtetem Druck der Elektroden (28, 30) die beiden Werkstücke (1, 27) gegeneinandergedrückt und damit das genannte andere Werkstück (27) auf die besagte zunächst elastisch nachgebende Auflagefläche (32) auf dem umgebogenen Rand (11) des Bleches (1) gedrückt wird, und anschliessend die Elektroden (28, 30) so stark gegeneinandergedrückt werden, dass sich eine weitere Verformung des umgebogenen Randes (11) und dadurch eine Anpassung von nicht satt aneinander anliegenden Flächenteilen der Auflagefläche (32) und der auf dieser aufliegenden Kontaktfläche (35) des anderen Werkstücks (27) aneinander ergibt und dass dann der Schweissstrom eingeschaltet und die beiden Werkstücke (1, 27) gleichzeitig längs der gesamten Auflagefläche (32) miteinander verschweisst werden.

2. Verfahren nach Anspruch 1, dadurch gekennzeichnet, dass die an die Auflagefläche (32) auf dem umgebogenen Rand (11) des Bleches (1) anzulegende Kontaktfläche (35) des anderen Werkstückes (27) so ausgebildet wird, dass sie gegenüber den sie umgebenden Teilen des anderen Werkstückes (27) hervorgehoben ist, so dass sich zumindest bis zum Schweissbeginn eine definierte begrenzte Fläche des Kontaktes zwischen den beiden Werkstücken (1, 27) und damit eine Begrenzung der sich aus der zum Schweissen erforderlichen Mindeststromdichte ergebenden notwendigen Mindeststromstärke bei Schweissbeginn ergibt.

3. Verfahren nach Anspruch 1 oder 2, dadurch gekennzeichnet, dass die an das Blech (1) anzulegende Elektrode (30) an den sich an den umgebogenen Rand (11) anschliessenden Bereich des Bleches (1) angelegt wird, so dass die an der Schweissstelle entstehende Wärme nur über den umgebogenen Rand (11) auf die am Blech (1) anliegende Elektrode (30) abgeleitet werden kann und sich daher ein geringer Wärmeabfluss von der Schweissstelle zu der am Blech (1) anliegenden Elektrode (30) ergibt.

4. Verfahren nach einem der Ansprüche 1 bis 3, dadurch gekennzeichnet, dass das genannte andere Werkstück (27) so ausgebildet wird, dass die an die Auflagefläche (32) auf dem umgebogenen Rand (11) des Bleches (1) anzulegende Kontaktfläche (35) dieses anderen Werkstückes (27) und die zum Anlegen der zugeordneten Elektrode (28) an diesem anderen Werkstück (27) vorgesehene Fläche (31) einen mittleren Abstand von mehr als einem Drittel, vorzugsweise mehr als der Hälfte, der Breite des umgebogenen Randes (11) des Bleches (1) voneinander haben und die Breite der besagten Kontaktfläche (35) kleiner als das Doppelte der Blechstärke des Bleches (1) und vorzugsweise annähernd gleichgross wie dieselbe ist und dass die wirksame Querschnittsfläche für die Wärmeleitung zwischen der besagten Kontaktfläche (35) und der zum Anlagen der Elektrode (28) vorgesehenen Fläche (31) kleiner als das Dreifache, vorzugsweise kleiner als das Doppelte der besagten Kontaktfläche (35) ist, so dass sich auch von der Schweissstelle zu der an dem genannten anderen Werkstück (27) anliegenden Elektrode (28) ein geringer Wärmeabfluss ergibt.

5. Verfahren nach einem der Ansprüche 1 bis 4, dadurch gekennzeichnet, dass für das Blech (1) ein Material mit einem Spannungs-Dehnungs-Diagramm verwendet wird, bei dem die Spannung an der Fliessgrenze ein Vielfaches der Spannungsänderungen in dem innerhalb des Bereiches der Gleichmassdehnung liegenden Teil des Fliessbereiches beträgt, und dass die Elektroden (28, 30) vor der Einschaltung des Schweissstromes so stark gegeneinandergedrückt werden, dass der umgebogene Rand (11) bis über die Fliessgrenze des Blechmaterials hinaus belastet wird und sich eine derartige weitere Verformung des umgebogenen Randes (11) ergibt, dass innerhalb der im wesentlichen gleichmässigen Druckverteilung längs der Auflagefläche (32) nur sehr geringe Druckschwankungen auftreten, bei denen das Verhältnis von Druckschwankung zu mittlerem Auflagedruck geringer als das Verhältnis der genannten Spannungsänderungen im Fliessbereich zur Spannung an der Fliessgrenze ist.

6. Verfahren nach einem der Ansprüche 1 bis 5, dadurch gekennzeichnet, dass als Material zumindest für das Blech (1), vorzugsweise für beide Werkstücke (1, 27), Stahl, vorzugsweise sogenannter unlegierter Baustahl, verwendet wird.

7. Verfahren nach einem der Ansprüche 1 bis 6, dadurch gekennzeichnet, dass der Schweissstrom in Form mehreren mit abwechselnder Polarität aufeinanderfolgenden Stromimpulsen von einer jeweils über mehrere Netzstromperioden reichenden, vorzugsweise im Bereich von 50 bis 200 msec liegenden Impulsdauer zugeführt wird.

8. Verfahren nach einem der Ansprüche 1 bis 7, dadurch gekennzeichnet, dass die den Druck der Elektroden (28, 30) gegeneinander und damit den Druck auf die Schweissstelle bewirkende Kraft während der Einschaltdauer des Schweissstromes, vorzugsweise in gleichbleibender Höhe, aufrechterhalten wird.

9. Verfahren nach einem der Ansprüche 1 bis 8 zum Widerstandsschweissen von zwei längs einer kreisrunden Verbindungsstelle zu verbindenden Werkstücken (1, 27), dadurch gekennzeichnet, dass die zu dem Gegeneinanderdrücken der Elektroden (28, 30) erforderliche Relativbewegung der Elektroden aufeinander zu mindestens annähernd in Normalenrichtung zur Kreisebene des von der Verbindungsstelle (32/35) gebildeten Kreises erfolgt.

10. Verfahren nach einem der Ansprüche 1 bis 9, dadurch gekennzeichnet, dass der Rand (11) des Bleches (1) um mindestens annähernd 180° umgebogen wird, so dass sich ein im wesentlichen u-förmiger Querschnitt des umgebogenen Randes (11) sowie des sich anschliessenden Bereiches des Bleches (1) ergibt.

11. Verfahren nach Anspruch 9 und 10, dadurch gekennzeichnet, dass der sich an den umzubiegenden Rand (11) anschliessende Bereich des Bleches (1) derart wannenförmig eingebuchtet wird, dass der umgebogene Rand (11) innerhalb der wannenförmigen Einbuchtung (18) liegt und die den umgebogenen Rand (11) abschliessende Kante (24) bis nahezu an die Wand (36) der wannenförmigen Einbuchtung (18) heranreicht, so dass sich die Kante (24) im Verlauf der genannten weiteren Verformung des umgebogenen Randes (11) auf der Wand (36) der wannenförmigen Einbuchtung (18) abstützen kann, und dass das genannte andere Werkstück (27) vorzugsweise so ausgebildet wird, dass die Kontaktfläche (35) desselben im mittleren Bereich des freien Schenkels des u-förmig umgebogenen Randes (11) auf dem Rand aufliegt.

12. Verfahren nach einem der Ansprüche 1 bis 9, dadurch gekennzeichnet, dass der Rand des Bleches um mehr als 180°, vorzugsweise um 225 bis 360°, umgebogen wird, so dass sich ein im wesentlichen in sich geschlossener, vorzugsweise annähernd ovaler oder runder Querschnitt des umgebogenen Randes ergibt.

13. Anwendung des Verfahrens nach einem der Ansprüche 1 bis 12 zur flüssigkeitsdichten Anbringung eines Spundes in einem zur Herstellung eines Stahlblech-Fasses oder -Behälters vorgesehenen Blechteil, dadurch gekennzeichnet, dass das genannte Blech das zur Herstellung des Stahlblech-Fasses oder -Behälters vorgesehene, mit einem Loch (2) an der vorgesehenen Anbringungsstelle des Spundes versehene Blechteil (1), die genannte Kante des Bleches die Kante dieses Loches (2) und das genannte andere Werkstück der anzubringende Spund (27) ist.

14. Anwendung nach Anspruch 15, dadurch gekennzeichnet, dass der Spund (27) ein rohrförmiges, innen zumindest auf einem Teil seiner Rohrlänge mit einem Gewinde (39) versehenes Teil (38) sowie einen einstückig mit dem rohrförmigen Teil (38) verbundenen Flansch (34) am einen Ende des rohrförmigen Teiles (38) umfasst, an dessen einer Flanschseite die an die genannte Auflagefläche (32) anzulegende Kontaktfläche (35) vorgesehen ist und an dessen andere Flanschseite (31) eine der Elektroden (28) angelegt wird, und dass der den genannten Rand des Bleches bildende Rand (11) des in dem Blechteil (1) vorgesehenen Loches (2) derart umgebogen wird, dass die lichte Weite des nach dem Umbiegen des Lochrandes (11) vergrösserten Loches mindestens annähernd gleichgross wie der Aussendurchmesser des rohrförmigen Teiles (38) des Spundes (27) ist.

**Claims**

1. Method for the electrical resistance welding of two workpieces (1, 27) which are to be connected together in fluid-tight and/or gas-tight manner along a connection zone (32, 35) which is of elongate, preferably closed-circle, form, at least one of said workpieces being a sheet metal element (1) which near the intended connection zone (32, 35) has an edge extending along said zone and consists of a flexible material capable of flow when stressed beyond its yield point, characterised in that first the rim (11) of the sheet metal element (1) adjoining the said edge is bent over in such a manner along the intended connection zone (32/35) that there is produced for the other (27) of the two workpieces (1, 27) to be connected, on the bent-over rim (11) of the sheet metal element (1), a supporting surface (32) which yields elastically in the first instance when the two workpieces (1, 27) press against one another and which extends along the intended connection zone, and that the two workpieces (1, 27) are then laid against each other and electrodes (28, 30) are so applied to the two workpieces that when the electrodes (28, 30) are pressed towards one another the two workpieces (1, 27) are pressed against each other and thus the said other workpiece (27) is pressed on to the said at first elastically yielding supporting surface (32) on the bent-over rim (11) of the sheet metal element (1), and then the electrodes (28, 30) are so strongly pressed towards one another that a further deformation of the bent-over rim (11) results and consequently an adaptation to one another of portions of the supporting surface (32) and of the contact surface (35) of the other workpiece (27) lying on said supporting surface which do not abut flush against one another, and that the welding current is then switched on and the two workpieces (1, 27) are welded together simultaneously along the entire supporting surface (32).

2. Method according to claim 1, characterised in that the contact surface (35) of the other workpiece (27) which is to be applied to the supporting surface (32) on the bent-over rim (11) of the sheet metal element (1) is so constructed that it is elevated relatively to those portions of the other workpiece (27) which surround it, so that at least up to the start of welding there is obtained a specific defined area of contact between the two workpieces (1, 27) and thus, at the start of welding, a limitation of the required minimum current strength resulting from the minimum current density needed for welding.

3. Method according to claim 1 or 2, characterised in that the electrode (30) to be applied to the sheet metal element (1) is applied to the region of the sheet metal element (1) adjoining the bent-over rim (11), so that the heat produced at the welding zone can be discharged only via the bent-over rim (11) to the electrode (30) abutting on the sheet metal element (1), and therefore these is a small heat outflow from the welding zone to the electrode (30) abutting on the sheet metal element (1).

4. Method according to one of claims 1 to 3, characterised in that the said other workpiece (27) is so constructed that that contact surface (35) of the said other workpiece (27) to be applied against the supporting surface (32) on the bent-over rim (11) of the sheet metal element (1), and the surface (31) provided on this other workpiece (27) for application of the associated electrode (28) are situated at a mean spacing of more than one third, preferably more than a half, of the width of the bent-over rim (11) of the sheet metal element (1), from one another, and the width of the said contact surface (35) is less than twice the thickness of the sheet metal element (1) and preferably approximately equal in size to said thickness, and that the effective cross-section area for heat conduction between the said contact surface (35) and the surface (31) intended for application of the electrode (28) is smaller than three times, preferably less than twice, the said contact surface (35), so that there is also a small heat discharge from the welding zone to the electrode (28) abutting on the said other workpiece (27).

5. Method according to one of claims 1 to 4, characterised in that there is used for the sheet metal element (1) a material with a stress-strain diagram wherein the stress at the yield point is a multiple of the stress variations in the part of the region of yield situated within the range of uniform extension and that the electrodes (28, 30) are pressed so strongly towards one another before the welding current is switched on, that the bent-over rim (11) is loaded to beyond the yield point of the material of the sheet metal element, and such a further deformation of the bent-over rim (11) results that within the substantially uniform pressure distribution along the supporting surface (32) only very slight pressure variations occur, wherein the ratio of pressure variation to mean supporting pressure is less than the ratio of the said stress variations in the region of yield to the stress at the yield point.

6. Method according to one of claims 1 to 5, characterised in that steel, preferably so-called unalloyed structural steel, is used as material at least for the sheet metal element (1), preferably for both workpieces (1, 27).

7. Method according to one of claims 1 to 6, characterised in that the welding current is supplied in the form of a plurality of current pulses succeeding one another with alternating polarity, of a pulse duration which extends in each case over a plurality of current supply periods and is preferably in the range of 50 to 200 msec.

8. Method according to one of claims 1 to 7, characterised in that the force which affects the pressing of the electrodes (28, 30) towards one another and thus the pressure on the welding zone is maintained during the period of time for which the welding current is switched-on, preferably at a constant level.

9. Method according to one of claims 1 to 8, for the resistance welding of two workpieces (1, 27) to be connected along a circular connection zone, characterised in that the relative movement of the electrodes towards one another required for pressing the electrodes (28, 30) towards one another is effected at least approximately in a direction perpendicular to the plane of the circle formed by the connection zone (32/35).

10. Method according to one of claims 1 to 9, characterised in that the rim (11) of the sheet metal element (1) is bent-over through at least approximately 180°, so that the bent-over rim (11) and the adjacent region of the sheet metal element (1) are given a substantially U-shaped cross-section.

11. Method according to claims 9 and 10, characterised in that the region of the sheet metal element (1) adjacent to the rim (11) being bent-over is recessed in trough-shaped manner in such a way that the bent-over rim (11) is situated within the trough-shaped recess (18), and the edge (24) terminating the bent-over rim (11) extends almost to the wall (36) of the trough-shaped recess (18), so that in the course of the said further deformation of the bent-over rim (11) the edge (24) can bear against the wall (36) of the trough-shaped recess (18), and that the said other workpiece (27) is preferably so constructed that the contact surface (35) thereof rests on the edge in the central region of the free leg of the U-shaped bent-over rim (11).

12. Method according to one of claims 1 to 9, characterised in that the rim of the sheet metal element is bent-over through more than 180°, preferably through 225 to 360°, so that the resulting bent-over rim has a preferably approximately oval or round cross-section, which is substantially closed on itself.

13. Application of the method according to one of claims 1 to 12 for the fluid-tight arranging of a bung in a sheet metal part intended for the manufacture of a sheet steel barrel or sheet steel container, characterised in that the said sheet metal element is the sheet metal part (1) which is intended for the manufacture of the sheet steel barrel or container and which is provided with a hole (2) at the place where the bung is to be arranged, the said edge of the sheet metal element is the edge of this hole (2), and the said other workpiece is the bung (27) which is to be arranged.

14. Application according to claim 15, characterised in that the bung (27) has a tubular part (38) provided with a screwthread internally over at least a portion of its tubular length, and also a flange (34) at one end of the tubular part (38), which flange is connected in one piece to the tubular part (38) and is provided at one side with the contact surface (35) to be applied against the said supporting surface (32) whereas against its other side (31) one of the electrodes (28) is applied, and that the rim (11), forming the said rim of the sheet metal element, of the hole (2) provided in the sheet metal part (1) is so bent-over that the internal clear width of the hole, which hole is enlarged after the bending-over of the hole rim (11), is at least approximately as large as the outer diameter of the tubular part (38) of the bung (27).

**Revendications**

1. Procédé pour réaliser le soudage par résistance électrique de deux pièces à traiter (1, 27) devant être reliées entre elles d'une manière étanche aux liquides et/ou aux gaz le long d'une zone de jonction allongée (32, 35), notamment refermée sur elle-même avec une forme circulaire et dont l'une au moins est une tôle (1), qui comporte, à proximité de la zone de jonction prévue (32, 35), une arête s'étendant le long de cette zone de jonction et qui est constituée en un matériau flexible, qui présente une aptitude au fluage dans le cas où elle est soumise à une contrainte dépassant sa limite apparente d'élasticité, caractérisé par le fait qu'on replie tout d'abord le bord (11) de la tôle (1), qui se raccorde à ladite arête, le long de la zone de jonction prévue (32/35) de manière à obtenir une surface d'application (32) fléchissant tout d'abord élastiquement lors d'une compression réciproque des deux pièces à traiter (1, 27) et s'étend le long de la zone de jonction prévue, et qu'ensuite on applique les deux pièces à traiter (1, 27) l'une contre l'autre et qu'on applique des électrodes (28, 30) contre les deux pièces à traiter de manière que dans le cas de pressions dirigées l'une vers l'autre, appliquées par les électrodes (28, 30), les deux pièces à traiter (1, 27) sont repoussées l'une contre l'autre et que par conséquent ladite autre pièce à traiter (27) est repoussée au niveau de ladite surface d'appui (32), qui fléchit tout d'abord élastiquement, sur le bord replié (11) de la tôle (1), et qu'ensuite on comprime l'une contre l'autre les électrodes (28, 30) suffisamment fortement pour qu'il se produise une déformation supplémentaire du bord replié (11) et par conséquent une adaptation d'éléments de surface, non appliqués complètement l'un contre l'autre, de la surface d'appui (32) et de la surface de contact (35), s'appliquant sur cette surface d'appui, de l'autre pièce à usiner (27) et qu'ensuite on branche le courant de soudage et qu'on soude simultanément l'une sur l'autre les deux pièces à traiter (1, 27), le long de l'ensemble de la surface d'appui (32).

2. Procédé selon la revendication 1, caractérisé en ce que la surface de contact (35) de l'autre pièce à traiter (27), qui doit être appliquée au niveau de la surface d'appui (32) sur le bord replié (11) de la tôle (1), est formée de telle sorte qu'elle fait saillie par rapport aux éléments, qui l'entourent, de l'autre pièce à traiter (27), de sorte qu'au moins jusqu'au début du soudage, on obtient une surface définie et délimitée du contact entre les deux pièces à traiter (1, 27) et de ce fait, au début du soudage, une limitation de l'intensité de courant minimale nécessaire, résultant de la densité de courant minimale requise pour le soudage.

3. Procédé suivant la revendication 1 ou 2, caractérisé par le fait qu'on applique l'électrode (30), qui doit être appliquée contre la tôle (1), contre la zone de la tôle (1), qui se raccorde au bord replié (11) de sorte que la chaleur, qui apparaît au niveau du point de soudage, ne peut être évacuée que par l'intermédiaire du bord replié (11) en direction de l'électrode (30) appliquée contre la tôle (1) et que l'on obtient de ce fait une faible évacuation de chaleur depuis le point de soudage en direction de l'électrode (30) appliquée contre la tôle (1).

4. Procédé suivant l'une des revendications 1 à 3, caractérisé par le fait que ladite autre pièce à traiter (27) est formée de telle sorte que la surface de contact (35) de cette autre pièce à traiter (27), qui doit être appliquée au niveau de la surface d'appui (32) contre le bord replié (11) de la tôle (1), et la surface (31) prévue pour l'application de l'électrode associée (28) sur cette autre pièce à traiter (27), sont écartées d'une distance moyenne de plus d'un tiers et de préférence de plus de la moitié de la largeur du bord replié (11) de la tôle (1), et que la largeur de ladite surface de contact (35) est inférieure au double de l'épaisseur de la tôle (1) et de préférence est approximativement égale à cette épaisseur, et que la surface de la section transversale efficace pour la conduction de chaleur entre ladite surface de contact (35) et la surface (31) prévue pour l'application de l'électrode (28), est inférieure au triple et de préférence est inférieure au double de ladite surface de contact (35) de sorte que l'on obtient une faible évacuation de chaleur également depuis le point de soudage en direction de l'électrode (28) appliquée sur ladite autre pièce à traiter (27).

5. Procédé suivant l'une des revendications 1 à 4, caractérisé en ce qu'on utilise, pour la tôle (1) un matériau possédant un diagramme contrainte-allongement pour lequel la contrainte au niveau de la limite de fluage est égale à un multiple des variations de la contrainte dans la partie de la zone de fluage, qui est située à l'intérieur de la zone d'allongement constant, et que l'on presse fortement les électrodes (28, 30) l'une contre l'autre avant le branchement du courant de soudage de manière que le bord replié (11) soit chargé au-delà de la limite de fluage du matériau de la tôle et que l'on obtienne une déformation supplémentaire du bord replié (11), telle que dans la distribution de pression essentiellement uniforme le long de la surface d'appui (32), il n'apparaît que de très faibles variations de pression, lors desquelles le rapport de la variation de la pression à la pression moyenne d'application est inférieur au rapport desdites variations de contrainte dans la zone de fluage à la contrainte au niveau de la limite de fluage.

6. Procédé suivant l'une des revendications 1 à 5, caractérisé par le fait qu'on utilise comme matériau, au moins pour la tôle (1), et de préférence pour les deux pièces à traiter (1, 27), de l'acier et de préférence ce qu'on appelle de l'acier de construction non allié.

7. Procédé suivant l'une des revendications 1 à 6, caractérisé par le fait que le courant de soudage est amené sous la forme de plusieurs impulsions de courant se succédant avec des polarités alternées et possédant une durée s'étendant respectivement sur plusieurs périodes du courant du réseau, de préférence dans une gamme allant de 50 à 200 ms.

8. Procédé suivant l'une des revendications 1 à 7, caractérisé par le fait que la force, qui provoque la pression des électrodes (28, 30) l'une contre l'autre et applique par conséquent la pression sur la zone de soudage est maintenue pendant la durée de branchement du courant de soudage, de préférence à une valeur constante.

9. Procédé suivant l'une des revendications 1 à 8, servant à réaliser le soudage par résistance de deux pièces à traiter (1, 27) devant être réunies le long d'une zone de jonction circulaire, caractérisé par le fait que le déplacement relatif des électrodes (28, 30) qui est nécessaire pour leur pression réciproque, s'effectue au moins approximativement suivant la direction de la normale au plan du cercle formé par la zone de jonction (32/35).

10. Procédé suivant l'une des revendications 1 à 9, caractérisé par le fait qu'on replie au moins sur approximativement 180° le bord (11) de la tôle (1) de sorte que l'on obtient une section transversale essentiellement en forme de u pour le bord replié (11) ainsi que pour la zone de la tôle (1), qui s'y raccorde.

11. Procédé suivant les revendications 9 et 10, caractérisé par le fait que l'on aménage un renforcement en forme de cuve dans la partie de la tôle (1) raccordée au bord (11) devant être replié, de telle sorte que le bord replié (11) se situe à l'intérieur du renforcement en forme de cuve (18) et que l'arête (24), qui termine le bord replié (11), s'étend presque jusqu'au niveau de la paroi (36) du renforcement en forme de cuve (18) de sorte que l'arête (24) peut prendre appui, lors de ladite déformation ultérieure du bord replié (11), sur la paroi (36) du renforcement en forme de cuve (18), et que ladite autre pièce à traiter (27) est formée de préférence de manière que la surface de contact (35) de cette pièce prenne appui sur le bord dans la zone médiane de la branche libre du bord replié en forme de U (11).

12. Procédé suivant l'une des revendications 1 à 9, caractérisé par le fait qu'on replie le bord de la tôle sur plus de 180°, de préférence entre 225 et 360°, de sorte que l'on obtient une section transversale essentiellement refermée sur elle-même, de préférence approximativement ovale ou cylindrique, pour le bord replié.

13. Utilisation du procédé suivant l'une des revendications 1 à 12, pour l'application, étanche aux liquides d'une bonde dans une partie en tôle prévue pour la fabrication d'un réservoir ou d'un récipient en tôle d'acier, caractérisée par le fait que ladite tôle constitue l'élément de tôle (1) prévu pour la fabrication du réservoir ou du récipient en tôle d'acier est muni d'un trou (2) prévu en un autre emplacement de montage de la bonde, que l'arête indiquée de la tôle constitue le bord de ce trou (2) et que ladite autre pièce à traiter représente la bonde (27) devant être mise en place.

14. Utilisation selon la revendication 13 caractérisée par le fait que la bonde (27) comporte une partie tubulaire (38) munie intérieurement d'un filetage (39) sur au moins une partie de sa longueur, et, au niveau d'une extrémité de la partie tubulaire (38) une bride (34) reliée d'un seul tenant à la partie tubulaire (38) et sur une face de laquelle se trouve prévue la surface de contact (35) devant être appliquée contre ladite surface d'appui (32) et sur l'autre face (31) de laquelle doit être appliquée l'une des électrodes (28), et que le bord (11), qui constitue ledit bord de la tôle, du trou (2) ménagé dans la partie en tôle (1), est repliée de telle sorte que le diamètre du trou, qui est agrandi par suite du pliage du bord (11) de ce trou, est au moins approximativement égal au diamètre extérieur de la partie tubulaire (38) de la bonde (27).

0 116 156

FIG. 1

FIG. 2

FIG. 3

FIG. 4

FIG. 5